# EUROPÄISCHE PATENTSCHRIFT

(11) **EP 1 390 934 B1**
(45) Veröffentlichungstag und Bekanntmachung des Hinweises auf die Patenterteilung: **29.12.2004**
(21) Anmeldenummer: 02718156.9
(22) Anmeldetag: 21.02.2002
(51) Int. Cl.: G09F 9/302, G09F 9/35, G09F 13/04, G02F 1/1333

(54) **LCD-ANZEIGETAFEL**
LCD DISPLAY PANEL
PANNEAU D'AFFICHAGE A CRISTAUX LIQUIDES

(30) Priorität: 21.02.2001 DE 10108411
(43) Veröffentlichungstag der Anmeldung: 25.02.2004
(73) Patentinhaber: AEG Gesellschaft für moderne Informationssysteme mbH, 89077 Ulm (DE)
(72) Erfinder: BAYRLE, Reiner, 89129 Langau (DE); BADER, Otto, 88447 Warthausen (DE); BITTER, Thomas, 73342 Bad Ditzenbach (DE)
(74) Vertreter: Winter, Brandl, Fürniss, Hübner, Röss, Kaiser, Polte Partnerschaft
(86) Internationale Anmeldenummer: PCT/EP2002/001863
(87) Internationale Veröffentlichungsnummer: WO 2002/067227

(56) Entgegenhaltungen:
- FR-A- 2 713 812
- JP-A- 7 020 443
- JP-A- 61 118 789
- US-A- 4 138 620
- US-A- 5 673 091
- PATENT ABSTRACTS OF JAPAN vol. 1995, no. 08, 29. September 1995 (1995-09-29) & JP 07 128671 A (SEIKO EPSON CORP), 19. Mai 1995 (1995-05-19)

## Beschreibung

Die Erfindung betrifft eine LCD-Anzeigetafel gemäß dem Oberbegriff des Anspruchs 1.

LCD-Anzeigen werden in letzter Zeit nicht nur für kleinflächige Anzeigen bei PCs, Meßgeräten und dergleichen eingesetzt sondern immer mehr auch für großflächige Anzeigen, z. B. im Bereich des öffentlichen Personennahverkehrs, an Flughäfen usw. Hierbei werden großflächige LCD-Anzeigetafeln aus einer Mehrzahl von neben- und übereinander angeordneten LCD-Anzeigemodulen zusammengesetzt. Die einzelnen LCD-Anzeigemodule weisen jeweils eine Vielzahl von einzeln ansteuerbaren Pixelelementen auf. Um diese einzelnen Pixelelemente ansteuern zu können, sind jedem LCD-Anzeigemodul Ansteuerschaltkreise zugeordnet, die üblicherweise im Randbereich der LCD-Anzeigemodule angeordnet sind. Derartige LCD-Anzeigetafeln sind beispielsweise aus DE 296 07 786 U1 bekannt. Die einzelnen LCD-Anzeigemodule sind beispielsweise aus der DE 42 09 072 A1 bekannt. Werden daher die aus der DE-OS 42 09 072 A1 bekannten Anzeigemodule nebeneinander und übereinander angeordnet, so ergeben sich dunkle bzw. nicht aktive Streifen, in denen keine Anzeige möglich ist. Bei der aus der DE 296 07 786 U1 bekannten LCD-Anzeigetafel werden die einzelnen LCD-Anzeigemodule daher in einem Rahmen angeordnet, so daß sich über die gesamte LCD-Anzeigetafel ein gitterförmiges Streifenmuster ergibt, in dem keine Anzeige erfolgen kann. Optisch entsteht daher der Eindruck einer Vielzahl von nebenund übereinander angeordneten Einzelanzeigen.

Um dies zu vermeiden, schlägt die FR 2713812 A1 vor, die Ansteuerschaltkreise hinter den Modulen anzuordnen und mit diesen über flexible Verbindungselemente zu verbinden. Aufgrund der hinter den Modulen angeordneten Kontrollschaltkreise, die jeweils benachbarte Module abschatten, ist hierbei für jedes Modul eine eigene Beleuchtungseinrichtung notwendig. Darüber hinaus ist eine solche Konstruktion mit separaten, mittels Verbindungselementen angekoppelten Ansteuerschaltkreisen aufwendig.

Ausgehend von der aus der FR 2713812 A1 bekannten LCD-Anzeigetafel ist es Aufgabe der vorliegenden Erfindung eine aus einer Mehrzahl von neben- und übereinander angeordneten LCD-Anzeigemodulen zusammengesetzte LCD-Anzeigetafel zu schaffen, bei der zwischen den einzelnen LCD-Anzeigemodulen nahezu keine passiven Flächen verbleiben und die einfach herzustellen bzw. zu beleuchten ist.

Die Lösung dieser Aufgabe erfolgt durch die Merkmale des Anspruchs 1.

Dadurch, daß unmittelbar benachbarte LCD-Anzeigemodule in dem Randbereich, in dem die Ansteuerschaltkreise angeordnet sind, überlappend nach Art von Schindeln angeordnet werden, können die Ansteuerschaltkreise abgedeckt werden, so daß keine passiven Flächen in der Anzeigefläche mehr verbleiben. Um zu verhindern, daß durch die Hinterleuchtungseinrichtung im Überlappungsdbereich die abgedeckten Ansteuerschaltkreise dunkle Schatten erzeugen, liegen die beiden benachbarten LCD-Anzeigemodule im Überlappungsbereich nicht unmittelbar übereinander, sondern weisen einen geringen Abstand voneinander auf, und in dem sich ergebenden Zwischenraum ist ein Lichtumlenkelement oder ein Leuchtmittel angeordnet. Durch das Lichtumlenkelement bzw. durch das Leuchtmittel wird die Abschattung der Hinterleuchtungseinrichtung durch die Ansteuerschaltkreise kompensiert, so daß bei Betrachtung der LCD-Anzeigetafel keine dunklen Bereiche im Überlappungsbereich mehr erscheinen. Als Hinterleuchtungseinrichtung im Sinne der Erfindung sind auch Mittel. durch die Umgebungslicht durch die LCD-Anzeigermodule hindurchgelenkt wird.

Durch die Anordnung der Ansteuerschaltkreise im Randbereich sind hier keine zusätzlichen Verbindungs- bzw. Halteelemente für hinter den Modulen angeordnete Ansteuerschaltkreise nötig. Darüber hinaus können aufgrund der Umlenkelemente und/oder Leuchtmittel mehrere Anzeigemodule vorteilhafterweise von der selben Hinterleuchtungseinrichtung illuminiert werden.

Gemäß einer bevorzugten Ausführungsform werden als aktive Leuchtmittel Mikro-LEDs, organische LEDs (OLED), lichtemittierende Polymere (LEP) (Anspruch 2) oder Kaltkathodenfluoreszenzleuchtmittel (Anspruch 3) eingesetzt. Die Intensität dieser.aktiven Leuchtmittel wird hierbei so geregelt, daß die Abschattung der eigentlichen Hinterleuchtungseinrichtung kompensiert wird und somit bei Betrachtung der Anzeige der Überlappungsbereich nicht sichtbar ist.

Gemäß einer bevorzugten Ausführungsform werden als Lichtumlenkelemente Folien mit Mikrostruktur, z. B. mit Fresnellinsen oder Mikroprismen, oder Folien mit Hologramstruktur verwendet (Anspruch 4). Durch diese Folien wird erreicht, daß seitlich in den Überlappungsbereich einfallendes Licht durch das Lichtumlenkelement nach vorne abgestrahlt wird und so den zweiten Randbereich des jeweiligen LCD-Anzeigemoduls von hinten her beleuchtet.

Gemäß einer bevorzugten Ausführungsform der Erfindung nach Anspruch 5 sind die Ansteuerschaltkreise im ersten Randbereich auf einem durchsichtigen Trägermaterial angeordnet, wodurch die Abschattung der Hinterleuchtungseinrichtung durch undursichtige Elemente, wie der Ansteuerschaltkreise, im Überlappungsbereich verringert wird.

Dem gleichen Zweck dient die vorteilhafte Ausgestaltung der Erfindung nach Anspruch 6, wonach die Ansteuerschaltkreise in eine durchsichtige Vergußmasse eingegossen bzw. überdeckt sind.

Gemäß einer weiteren vorteilhaften Ausgestaltung der Erfindung nach Anspruch 7, werden die in dem LCD-Anzeigemodul verwendeten Polarisationsfilter nicht wie bisher bis unmittelbar an den ersten Randbereich herangeführt, sondern die Polarisationsfilter erstrecken sich lediglich über die aktive Anzeigefläche, d.h. über die Pixelelemente der jeweiligen LCD-Anzeigemodule. Auch hiermit werden die dunklen Bereiche verringert bzw. zumindest ein Teil der Hinterleuchtung kann die üblicherweise verwendeten Glasträger in den polfilterfreien Flächen durchdringen.

Gemäß einer weiteren vorteilhaften Ausgestaltung der Erfindung nach Anspruch 8 sind die einzelnen LCD-Anzeigemodule bezüglich der gesamten Anzeigeebene gekippt oder geneigt. Auf diese Weise wird der sich über größere Flächen ergebende Versatz durch die schindelförmige Anordnung kompensiert.

Gemäß einer weiteren vorteilhaften Ausgestaltung der Erfindung nach Anspruch 9 werden vorzugsweise rechteckförmige oder quadratische LCD-Anzeigemodule verwendet, wobei der erste und zweite Randbereich einander gegenüberliegend ausgebildet ist. An den beiden anderen Randbereichen des Rechtecks oder Quadrats, in denen keine Ansteuerschaltkreise vorgesehen sind, können die LCD-Anzeigemodule unmittelbar aneinander auf Stoß angeordnet werden, wodurch sich ein nahezu kontinuierlicher Übergang ergibt. Diese Anordnung ist in der DE-OS 10023378.3 offenbart. Insofern wird auf die DE-OS 10023378.3 vollinhaltlich bezug genommen.

Gemäß weiteren vorteilhaften Ausgestaltungen der Erfindung nach Anspruch 10 und 11 sind die Zuleitungen zu den Ansteuerschaltkreisen und zu den aktiven Leuchtmitteln im Überlappungsbereich in Form von flexiblen und durchsichtigen Flachbandkbeln ausgeführt. Auch hierdurch wird die Abschattung der Hinterleuchtungseinrichtung verkleinert.

Weitere Einzelheiten, Merkmale und Vorteile der Erfindung ergeben sich aus der nachfolgenden Beschreibung bevorzugten Ausführungsformen anhand der Zeichnung.

Es zeigt:
Fig. 1 eine beispielhafte Ausführungsform der Erfindung in Aufsicht,
Fig. 2 eine Aufsicht auf ein einzelnes LCD-Anzeigemodul,
Fig..3 eine Schnittdarstellung entlang der Linie A-A in Fig. 2,
Fig. 4 eine Teilschnittdarstellung entlang der Linie B-B in Fig. 1,
Fig. 5 eine Detailansicht des Überlappungsbereichs zwischen zwei LCD-Anzeigemodulen mit einem aktiven Leuchtmittel dazwischen,
Fig. 6 eine Detaildarstellung des Überlappungsbereichs zwischen zwei LCD-Anzeigemodulen mit einem Lichtumlenkelement dazwischen, und
Fig. 7a und 7b eine schematische Schnittdarstellung, die die Neigung der einzelnen LCD-Anzeigemodule gegenüber der Anzeigefläche der LCD-Anzeigetafel zeigt.

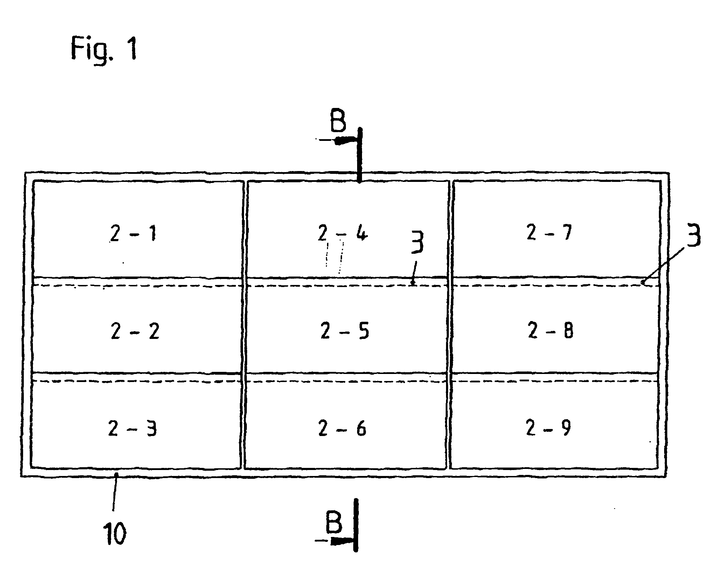

Fig. 1 zeigt eine Aufsicht auf eine beispielhafte Ausführungsform der Erfindung bei der LCD-Anzeigetafel gemäß der vorliegenden Erfindung aus insgesamt neun LCD-Anzeigemodulen 2-1 bis 2-9 zusammengesetzt ist. Hierbei sind jeweils drei LCD-Anzeigemodule übereinander bzw. untereinander angeordnet, wobei sich jeweils zwei LCD-Anzeigemodule in einem Überlappungsbereich 3 überlappen. Die nebeneinander angeordneten LCD-Anzeigemodule, z.B. 2-1 und 2-4, sind auf Stoß nebeneinander angeordnet sind. Die rechteckförmigen LCD-Anzeigemodule 2 weisen jeweils einen ersten und einen zweiten Randbereich 4 bzw. 6 auf, die an gegenüberliegenden Seiten der Rechteckform ausgebildet sind. Bei der in Fig. 1 dargestellten Ausführungsform ist der erste Randbereich 4 unten ausgebildet, während der zweite Randbereich 6 auf der gegenüberliegenden Seite oben ausgebildet ist. Der erste Randbereich 4 des ersten LCD-Anzeigemodels 2-1 wird durch den zweiten Randbereich 6 des zweiten LCD-Anzeigemoduls 2-2 überdeckt, so daß der erste Randbereich 4 des ersten LCD-Anzeigemoduls 2-1 und der zweite Randbereich 6 des zweiten LCD-Anzeigemdouls 2-2 den gemeinsamen Überlappungsbereich 3 bilden. In gleicher Weise wird der erste Randbereich 4 des zweiten LCD-Anzeigemoduls 2-2 durch den zweiten Randbereich 6 des dritten LCD-Anzeigemoduls 2-3 überdeckt. Der erste Randbereich 4 des dritten LCD-Anzeigemoduls 2-3 wird durch einen Rahmen 8 abgedeckt. Der Rahmen 8 umgreift die gesamte Anzeigetafel mit allen neun LCD-Anzeigemodulen 2. Die Anordnung der LCD-Anzeigemodule 2-1 bis 2-3 wiederholt sich für die LCD-Anzeigemodule 2-4 bis 2-6 und ebenso für die LCD-Anzeigemodule 2-7 bis 2-9. Der Zusammenhalt der nebeneinander und übereinander angeordneten LCD-Anzeigemodule 2-i ergibt sich durch nicht näher dargestellte durchsichtige Halterungen, die im Bereich des Stoßes der nebeneinanderliegenden LCD-Anzeigemodule 2 vorgesehen sind.

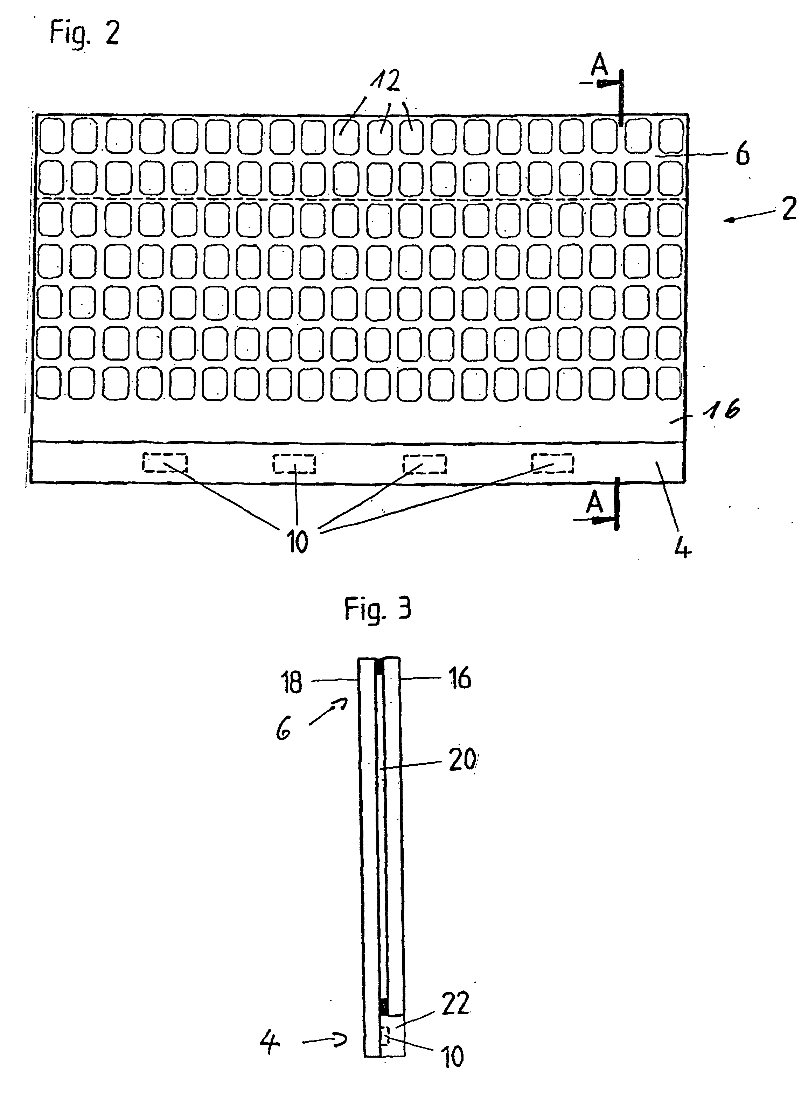

Fig. 2 zeigt ein einzelnes LCD-Anzeigemodul 2 in Aufsicht und Fig. 3 einen Schnitt entlang der Linie A-A in Fig. 2. der erste Randbereich 4 ist unten und der zweite Randbereich 6 oben ausgebildet. Auf dem ersten Randbereich 4 sind eine Mehrzahl von Ansteuerschaltkreisen 10 angeordnet, die über eine Vielzahl von nicht näher dargestellten Leitungen mit einer Mehrzahl von Pixelelementen 12 verbunden sind. Die Pixelelemente 12 erstrecken sich in Form einer Matrix mit Zeilen und Spalten über die gesamte Fläche des LCD-Anzeigemoduls 2 mit Ausnahme des ersten Randbereichs 4. An seitlichen Kanten 14 werden nebeneinander liegende LCD-Anzeigemodule 2 auf Stoß angeordnet, so daß sich eine horizontal durchgehende Anzeigefläche ergibt.

Fig. 3 zeigt, daß das LCD-Anzeigemodul 2 eine durchsichtige erste Trägerplatte 16 und eine zweite durchsichtige Trägerplatte 18 umfaßt, zwischen denen ein FLüssigkristall 20 eingeschlossen ist. Hierbei ist die zweite Trägerplatte 18 etwas größer und überragt die erste Trägerplatte 16 im ersten Randbereich 4. Im ersten Randbereich 4 sind die Ansteuerschaltkreise 10 angeordnet und durch eine durchsichtige Vergußmasse 22 abgedeckt.

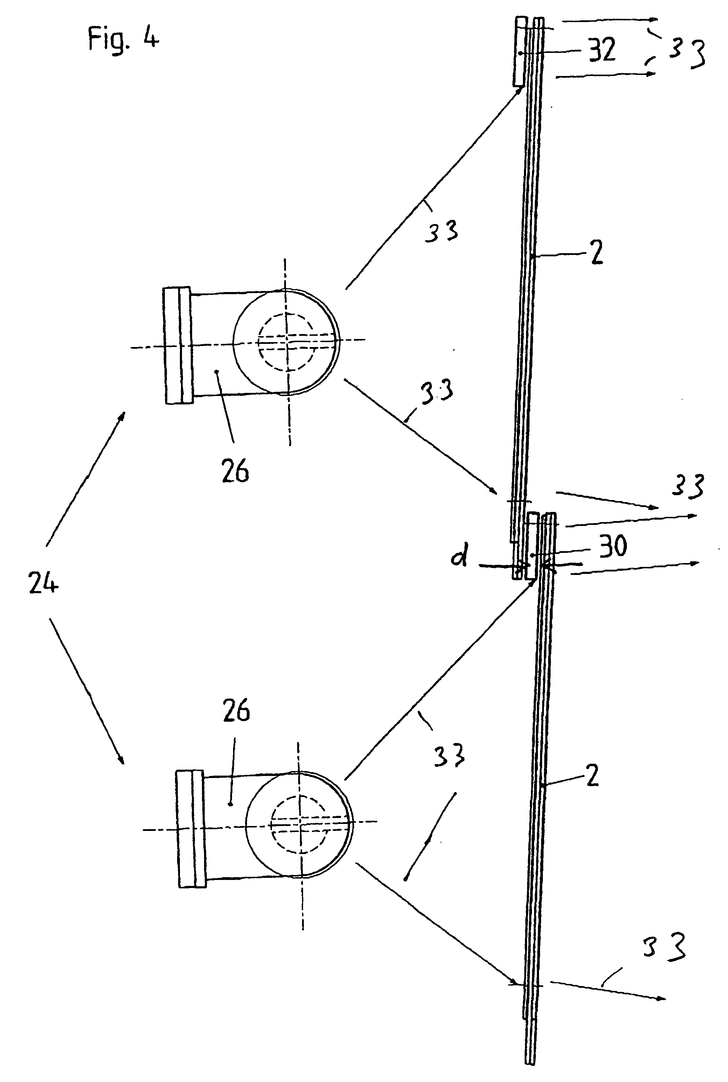

Wie aus Fig. 4 zu ersehen ist, ist hinter den LCD-Anzeigemodulen 2 eine Hinterleuchtungseinrichtung 24 angeordnet, die eine Mehrzahl von Leuchtelementen 26 umfaßt. Hierbei ist jedem LCD-Anzeigemodul 2 ein Leuchtelement 26 zugeordnet. Die überlappend angeordneten LCD-Anzeigemodule 2 sind in dem Überlappungsbereich 3 im Abstand d zueinander angeordnet. In dem sich ergebenden Zwischenraum ist ein aktives LeuchtmitteJ 30 oder eine passives Lichtumlenkelement 32 angeordnet. Durch das aktive Leuchtmittel 30 oder durch das Lichtumlenkelement 32 wird die Abschattung der Hinterleuchtungseinrichtung 24 durch die undurchsichtigen Ansteuerschaltkreise 10 im ersten Randbereich 4 der LCD-Anzeigemodule 2 kompensiert. Das Bezugszeichen 33 bezeichnet Lichtstrahlen, die von der Hinterleuchtungseinrichtung 24 kommend von hinten die einzelnen LCD-Anzeigemodule 2 durchdringen.

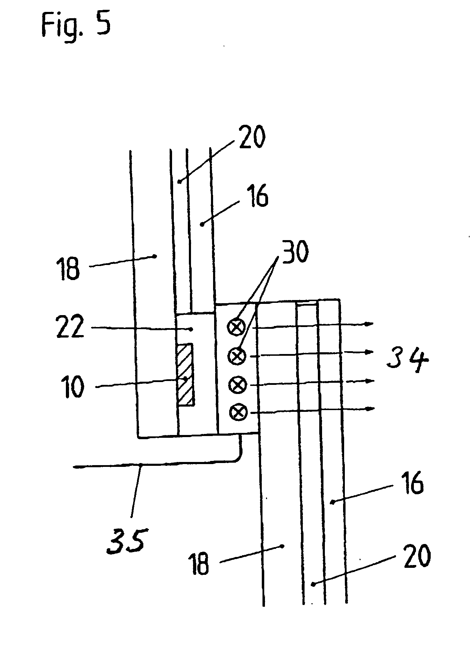

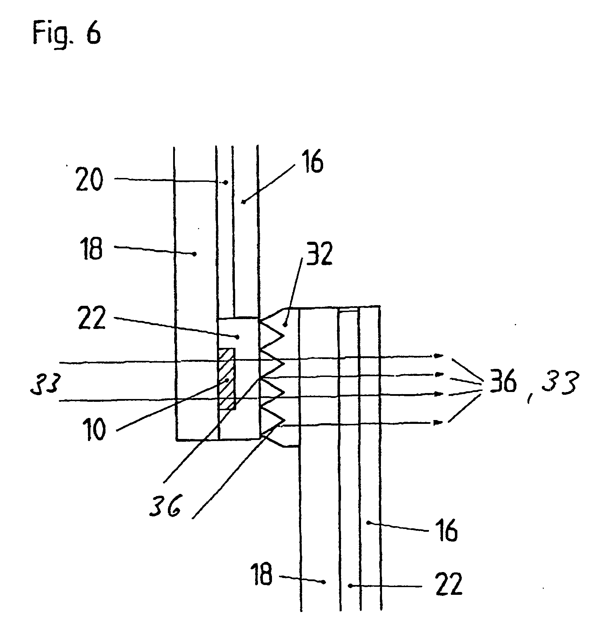

Figuren 5 und 6 zeigen jeweils Detailansichten des Überlappungsbereichs 3, wobei bei der Ausführungsform nach Fig. 5 Mikro-LEDs als aktives Leuchtmittel 30 im Überlappungsbereich 3 zwischen den LCD-Anzeigemodulen 2 vorgesehen sind, während bei der Ausführungform nach Fig. 6 eine Folie mit Mikrostruktur als Lichtumlenkelement 32 vorgesehen ist.

Durch die Mikro-LEDs 30 wird der zweite Randbereich 6 des jeweiligen LCD-Anzeigemoduls 2 zusätzlich hinterleuchtet und so die teilweise Abschattung der Hinterleuchtungseinrichtung 24 durch die Ansteuerschaltkreise 10 und deren Zuleitungen kompensiert. Dies ist durch Lichtstrahlen 34 dargestellt. Anstelle der Mikro-LEDs 30 können auch organische LEDs (OLED), lichtemittierende Polymere (LEP) oder Kaltkathodenfluoreszenzlampen verwendet werden. Auch andere aktive Leuchtmittel sind möglich die in die geringe Spaltbreite im Überlappungsbereich 3 eingebracht werden können. Die Stromversorgung und Ansteuerung der aktiven Leuchtmittel 30 erfolgt über ein durchsichtiges und flexibles Flachbandkabel 35. Die Verwendung eines durchsichtigen Materials, wie z. B. Polyester oder Polykarbonat, anstelle von Kapton verringert die Abschattung der Hinterleuchtungseinrichtung 24.

Fig. 6 zeigt schematisch eine Folie mit Mikrostruktur als Lichtumlenkelement 32, die seitlich auf die Folie 32 einfallendes Licht nach vorne auf den zweiten Randbereich 6 des jeweiligen LCD-Anzeigemoduls 2-i umlenkt. Beispielhaft sind seitlich einfallende Lichtstrahlen 36 eingezeichnet, die nach vorne durch den zweiten Randbereich 6 abgelenkt werden. Zusätzlich durchdringen auch die Lichtstrahlen 33 die durchsichtige Vergußmasse 22 im ersten Randbereich 4 und hinterleuchten das LCD-Anzeigemodul im ersten Randbereich.

Folien, die als Lichtumlenkelement 32 geeignet sind, werden beispielsweise von der Firma 3M unter dem Markennamen Vikuiti vertrieben. Die Art und Dicke der Folie werden so gewählt, daß die Abschattung der Hinterleuchtungseinrichtung 24 durch die Ansteuerschaltkreise 10 kompensiert wird. Die Umlenkung des Lichts kann durch Mikroprismen oder Fresnellinsen erreicht werden. Anstelle der Mikrostruktur ist auch die Verwendung von entsprechend ausgebildeten Hologrammfolien als Lichtumlenkelement 32 möglich.

Bei den LCD-Anzeigemodulen 2 werden vor und hinter dem Flüssigkristall 22 Polarisationsfilter (nicht dargestellt) angeordnet. Die LCD-Anzeigemodule lassen sich im NW-Modus (normally white; ohne Spannung durchscheinend) oder im NB-Modus (normally black; ohne Spannung dunkel) betreiben. Damilkeine ungewünschte Abschattung der Hinterleuchtungseinrichtung 24 erfolgt, werden die folienförmigen Polarisationsfilter so dimensioniert, daß sie nur die aktive Anzeigefläche der LCD-Anzeigemodule 2 überdecken.

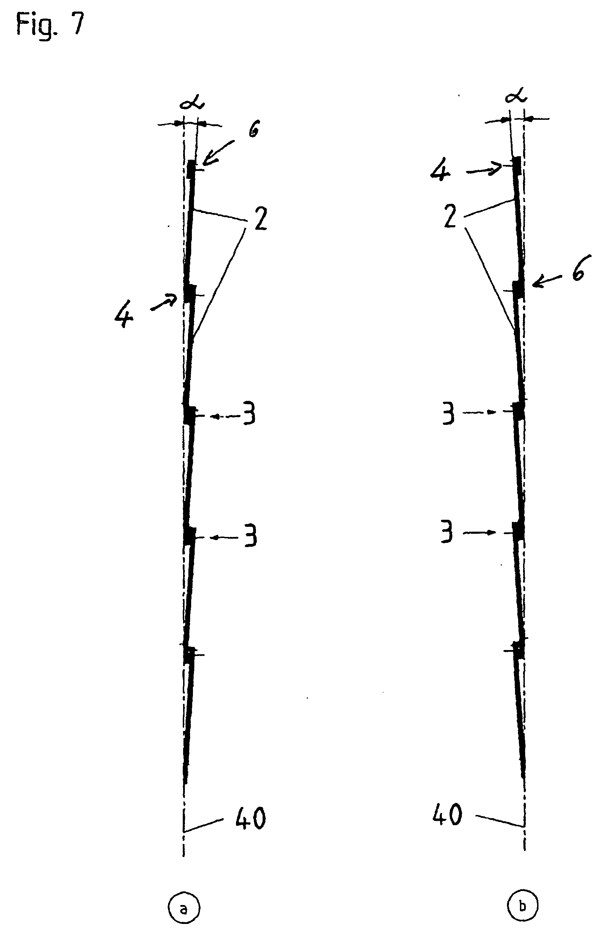

Fig. 7a und 7b zeigen schematisch Schnittdarstellungen aus denen zu ersehen ist, daß die einzelnen LCD-Anzeigemodule 2 leicht - spitzer Winkel α - gegenüber der Anzeigeebene 40 der gesamten LCD-Anzeigetafel geneigt sind. Fig. 7a zeigt eine Anordnung von LCD-Anzeigemodulen, bei denen der erste Randbereich 4 unten ist, und Fig. 7b zeigt eine Anordnung, bei der der erste Randbereich 4 jeweils oben ist. Die in den Figuren 7a und 7b nicht dargestellte Hinterleuchtungseinrichtung wäre in den Figuren jeweils links neben der Schnittdarstellung der LCD-Anzeigetafel angeordnet. Durch die Neigung der LCD-Anzeigemodule 2 wird verhindert, daß sich durch die Überlappung der einzelnen LCD-Anzeigemodule 2 ein Versatz von oben nach unten aufbaut. Der Winkel α liegt im Bereich zwischen 1° und 10°. Die Anordnung nach Fig. 7a und 7b ist insbesondere bei großflächigen LCD-Tafeln wichtig.

### Bezugszeichenliste:

- 2: LCD-Anzeigemodule
- 3: Überlappungsbereich
- 4: erster Randbereich
- 6: zweiter Randbereich
- 8: Rahmen
- 10: Ansteuerschaltkreise
- 12: Pixelelemente
- 14: Seitenkanten
- 16: erste Trägerplatte
- 18: zweite Trägerplatte
- 20: Flüssigkristall
- 22: durchsichtige Vergußmasse
- 24: Hinterleuchtungseinrichtung
- 26: Leuchtelement
- 30: Leuchtmittel
- 32: Lichtumlenkelement
- 33: Lichtstrahl aus 24
- 34: Lichtstrahl aus 30
- 35: durchsichtiges, flexibles Flachbandkabel
- 36: Lichtstrahl aus 24 durch 32
- 40: Anzeigeebene
- α: Neigungswinkel

## Patentansprüche

1. LCD-Anzeigetafel mit
einer Mehrzahl von einzelnen eng benachbart angeordneten, flächig sich erstreckenden, LCD-Anzeigemodulen (2), und
einer hinter den LCD-Anzeigemodulen angeordneten Hinterleuchtungseinrichtung (24),
wobei jedes der LCD-Anzeigemodule (2) jeweils eine Mehrzahl von einzeln ansteuerbaren Pixelelementen (12) und jeweils einen ersten und einen zweiten Randbereich (4, 6) aufweist, wobei zwei unmittelbar benachbarte LCD-Anzeigemodule (2) mit ihren Randbereichen (4, 6) derart überlappend angeordnet sind, daß der erste Randbereich (4) des einen LCD-Anzeigemoduls (2) zwischen Hinterleuchtungseinrichtung (24) und dem zweiten Randbereich (6) des anderen LCD-Anzeigemoduls (2) angeordnet ist und so ein Überlappungsbereich (3) zwischen den beiden LCD-Anzeigemodulen (2) festgelegt ist, und wobei die zwei unmittelbar benachbarten LCD-Anzeigemodule (2) im Überlappungsbereich (3) in einem Abstand (d) voneinander angeordnet sind,
**dadurch gekennzeichnet, daß**
jedes der LCD-Anzeigemodule (2) jeweils in dem ersten Randbereich (6) angeordnete Ansteuerschaltkreise (10) für die Pixelelemente (12) aufweist, und
daß in dem Überlappungsbereich (3) zwischen den zwei LCD-Anzeigemodulen (2) ein Leuchtmittel (30) und/oder eine Lichtumlenkelement (32) angeordnet ist.

2. LCD-Anzeigetafel nach Anspruch 1, **dadurch gekennzeichnet, daß** das Leuchtmittel (30) Mikro-LEDs, organische LEDs und/oder LEPs umfaßt, die den zweiten Randbereich (6) von hinten beleuchten.

3. LCD-Anzeigetafel nach Anspruch 1 oder 2, **dadurch gekennzeichnet, daß** das Leuchtmittel (30) Kaltkathodenfluoreszenzleuchtmittel umfaßt.

4. LCD-Anzeigetafel nach einem der vorhergehenden, **dadurch gekennzeichnet, daß** das Lichtumlenkelement (32) eine Folie mit Mikrostruktur, insbesondere mit Fresnellinsen oder Mikroprismen, oder eine Folie mit Hologrammstruktur ist.

5. LCD-Anzeigetafel nach einem der vorhergehenden Ansprüche, **dadurch gekennzeichnet, daß** die Ansteuerschaltkreise (10) auf einem durchsichtigen Trägermaterial angeordnet sind.

6. LCD-Anzeigetafel nach einem der vorhergehenden Ansprüche, **dadurch gekennzeichnet, daß** die Ansteuerschaltkreise (10) mit einer durchsichtigen Vergußmasse (22) überdeckt sind.

7. LCD-Anzeigetafel nach einem der vorhergehenden Ansprüche, **dadurch gekennzeichnet, daß** die einzelnen LCD-Anzeigemodule (2) Polarisationsfilter aufweisen, die nur den Flächenbereich der Pixelelemente (12) überdecken.

8. LCD-Anzeigetafel nach einem der vorhergehenden Ansprüche, **dadurch gekennzeichnet, daß** die Mehrzahl der LCD-Anzeigemodule (2) eine Anzeigeebene (40) definieren und daß die einzelnen Anzeigemodule (2) zu dieser Anzeigeebene (40) geneigt angeordnet sind.

9. LCD-Anzeigetafel nach einem der vorhergehenden Ansprüche, **dadurch gekennzeichnet, daß** die LCD-Anzeigemodule (2) rechteckig oder quadratisch sind und daß der erste und der zweite Randbereich (4, 6) an gegenüberliegenden Seiten des Rechtecks bzw. des Quadrats ausgebildet sind.

10. LCD-Anzeigetafel nach einem der vorhergehenden Ansprüche, **dadurch gekennzeichnet, daß** die Leuchtmittel (30) über ein erstes durchsichtiges Flachbandkabel (34) mit einer Steuereinrichtung und/oder einer Stromversorgung verbunden sind.

11. LCD-Anzeigetafel nach der vorhergehenden Ansprüche, **dadurch gekennzeichnet, daß** die Ansteuerschaltkreise (10) über ein zweites durchsichtiges Flachbandkabel mit der Steuereinrichtung und der Stromversorgung verbunden sind.

## Claims

1. An LCD display panel, comprising
a plurality of closely adjacently arranged, planarly extending, single LCD display modules (2), and backlighting means (24) arranged behind said LCD display modules,
wherein each of said LCD display modules (2) has a plurality of individually controllable pixel elements (12) and first and second border zones (4, 6), with the directly adjacent LCD display modules (2) being arranged with the border zones (4, 6) thereof overlapping such that the first border zone (4) of said one LCD display module (2) is arranged between backlighting means (24) and said second border zone (6)) of the other LCD display module (2), whereby an overlap zone (3) between said two LCD display modules (2) is defined, and said two directly adjacent LCD display modules (2) are arranged at a spacing (d) from each other in said overlap zone (3), **characterized in that**
each of said LCD display modules (2) has control circuits (10) for said pixel elements (12) arranged in said first border zone (6), and
lighting means (30) and/or a light redirecting element (32) are arranged in said overlap zone (3) between said two LCD display modules (2).

2. The LCD display panel in accordance with claim 1, **characterized in that** said lighting means (30) encompass micro-LEDs, organic LEDs and/or LEPs for backlighting said second border zone (6).

3. The LCD display panel in accordance with claim 1 or 2, **characterized in that** said lighting means (30) encompass cold cathode fluorescence lighting means.

4. The LCD display panel in accordance with any one of the foregoing claims, **characterized in that** said light redirecting element (32) is a sheet with a micro-structure, in particular with Fresnel lenses or micro-prisms, or a sheet with hologram structure.

5. The LCD display panel in accordance with any one of the foregoing claims, **characterized in that** said control circuits (10) are arranged on a transparent carrier material.

6. The LCD display panel in accordance with any one of the foregoing claims, **characterized in that** said .control circuits (10) are covered by a transparent sealing compound (22).

7. The LCD display panel in accordance with any one of the foregoing claims, **characterized in that** said single LCD display modules (2) include polarization filters covering the area of said pixel elements (12) only.

8. The LCD display panel in accordance with any one of the foregoing claims, **characterized in that** the majority of said LCD display modules (2) define a display plane (40), and said single display modules (2) are arranged at an inclination relative to said display plane (40).

9. The LCD display panel in accordance with any one of the foregoing claims, **characterized in that** said LCD display modules (2) are rectangular or square, and that said first and second border zones (4, 6) are formed on opposite sides of the rectangle or square.

10. The LCD display panel in accordance with any one of the foregoing claims, **characterized in that** said lighting means (30) are connected through a first transparent flat cable (34) with control means and/or a power supply.

11. The LCD display panel in accordance with any one of the foregoing claims, **characterized in that** said control circuits (10) are connected through a second transparent flat cable with said control means and said power supply.

## Revendications

1. Panneau d'affichage à cristaux liquides comprenant
une pluralité de modules d'affichage à cristaux liquides (2) individuels, disposés très près les uns des autres, s'étendant à plat, et
un dispositif de rétro-éclairage (24) disposé derrière les modules d'affichage à cristaux liquides,
chacun des modules d'affichage à cristaux liquides (2) présentant respectivement une pluralité d'éléments pixels (12) activables individuellement et respectivement une premiére et une seconde zones périphériques (4, 6), deux modules d'affichage à cristaux liquides (2) directement voisins étant disposés avec leurs zones périphériques (4, 6) en se chevauchant de telle sorte que la première zone périphérique (4) d'un module d'affichage à cristaux liquides (2) est disposée entre un dispositif de rétro-éclairage (24) et la seconde zone périphérique (6) de l'autre module d'affichage à cristaux liquides (2) et une zone de chevauchement (3) est définie ainsi entre les deux modules d'affichage à cristaux liquides (2), et les deux modules d'affichage à cristaux liquides (2) directement voisins étant disposés dans la zone de chevauchement (3) à une distance (d) l'un de l'autre,
**caractérisé en ce que**
chacun des modules d'affichage à cristaux liquides (2) présente des circuits d'amorçage (10) disposés dans la première zone périphérique (6) pour les éléments pixels (12), et **en ce qu'**un moyen d'éclairage (30) et/ou un élément réfléchissant (32) est disposé dans la zone de chevauchement (3) entre les deux modules d'affichage à cristaux liquides (2).

2. Panneau d'affichage à cristaux liquidés selon la revendication 1, **caractérisé en ce que** le moyen d'éclairage (30) comprend des micro-LEDs, des LEDs organiques et/ou des LEPs, qui éclairent la seconde zone périphérique (6) par l'arrière.

3. Panneau d'affichage à cristaux liquides selon la revendication 1 ou 2,
**caractérisé en ce que** le moyen d'éclairage (30) comprend des moyens d'éclairage à fluorescence à cathode froide,

4. Panneau d'affichage à cristaux liquides selon l'une quelconque des revendications précédentes, **caractérisé en ce que** l'élément réfléchissant (32) est un film à microstructure, et en particulier avec des lentilles de Fresnel ou des microprismes, ou un film à structure d'hologramme.

5. Panneau d'affichage à cristaux liquides selon l'une quelconque des revendications précédentes, **caractérisé en ce que** les circuits d'amorçage (10) sont disposés sur un matériau support transparent.

6. Panneau d'affichage à cristaux liquides selon l'une quelconque des revendications précédentes, **caractérisé en ce que** les circuits d'amorçage (10) sont recouverts avec une masse de scellement (22) transparente.

7. Panneau d'affichage à cristaux liquides selon l'une quelconque des revendications précédentes, **caractérisé en ce que** les différents modules d'affichage à cristaux liquides (2) présentent des films de polarisation qui recouvrent seulement la zone superficielle des éléments pixels (12).

8. Panneau d'affichage à cristaux liquides selon l'une quelconque des revendications précédentes, **caractérisé en ce que** la pluralité des modules d'affichage à cristaux liquides (2) définissent un plan d'affichage (40) et **en ce que** les modules d'affichage (2) individuels sont disposés de façon inclinée par rapport à ce plan d'affichage (40).

9. Panneau d'affichage à cristaux liquides selon l'une quelconque des revendications précédentes, **caractérisé en ce que** les modules d'affichage à cristaux liquides (2) sont rectangulaires ou carrés et **en ce que** la première et la seconde zones périphériques (4, 6) sont conçues sur des côtés opposés du rectangle ou du carré.

10. Panneau d'affichage à cristaux liquides selon l'une quelconque des revendications précédentes, **caractérisé en ce que** les moyens d'éclairage (30) sont reliés au moyen d'un câble plat (34) transparent à un appareil de commande et/ou une alimentation électrique.

11. Panneau d'affichage à cristaux liquides selon les revendications précédentes, **caractérisé en ce que** les circuits d'amorçage (10) sont reliés au moyen d'un second câble plat à l'appareil de commande et à l'alimentation électrique.
